# EUROPÄISCHE PATENTSCHRIFT

(11) **EP 1 101 023 B1**
(45) Veröffentlichungstag und Bekanntmachung des Hinweises auf die Patenterteilung: **29.01.2003**
(21) Anmeldenummer: 99950443.4
(22) Anmeldetag: 28.07.1999
(51) Int. Cl.: F02B 67/06, F16H 9/04

(54) **STUFENLOS VERSTELLBARES GETRIEBE FÜR EIN KRAFTFAHRZEUG**
CONTINUOUS-VARIATION TRANSMISSION FOR VEHICLES
TRANSMISSION A VARIATION CONTINUE

(30) Priorität: 31.07.1998 DE 19834481
(43) Veröffentlichungstag der Anmeldung: 23.05.2001
(73) Patentinhaber: ROBERT BOSCH GMBH, 70442 Stuttgart (DE)
(72) Erfinder: AHNER, Peter, D-71032 Böblingen (DE); WIEDNER, Erwin, D-71638 Ludwigsburg (DE)
(86) Internationale Anmeldenummer: DE9902314
(87) Internationale Veröffentlichungsnummer: WO00008323

(56) Entgegenhaltungen:
- EP-A- 0 427 303
- DE-A- 3 205 017
- DE-A- 3 441 180
- GB-A- 935 944
- GB-A- 2 037 913

## Beschreibung

Die Erfindung geht aus von einem stufenlos verstellbaren Getriebe für ein Kraftfahrzeug nach der Gattung des Hauptanspruchs. Es ist bereits bekannt, stufenlos verstellbare Getriebe zum Antrieb von Kraftfahrzeugen einzusetzen. Weiterhin ist beispielsweise aus der DE 32 05 017 A1 bekannt, Nebenaggregate eines Kraftfahrzeugs, wie beispielsweise einen Generator, ein Gebläse oder dergleichen über ein zusätzliches, stufenlos verstellbares Getriebe mit einer relativ konstanten Drehzahl zu betreiben. Dadurch können diese Nebenaggregate konstruktiv besser ausgelegt werden, wodurch ihr Wirkungsgrad verbessert werden kann. Nachteilig hierbei ist, daß sowohl zum Antrieb des Kraftfahrzeugs, als auch zum Antrieb der Nebenaggregate zwei separate Getriebe verwendet werden müssen.

In der GB 935,944 wird ein stufenlos verstellbares Getriebe mit jeweils einem auf der Eingangswelle und einer Ausgangswelle angeordneten verstellbaren Kegelscheibenpaar und einem die beiden Kegelscheibenpaare umschlingenden Riemen vorgeschlagen. Auf einer zusätzlichen Ausgangswelle ist ein drittes verstellbares Kegelscheibenpaar angeordnet, das von dem Riemen umschlungen wird. Dieses Getriebe dient dem Antrieb von zwei Rollen, auf denen Material, wie z.B. Papier- oder Stoffbahnen, aufgewickelt wird. Hierzu werden die beiden Ausgangswellen so angetrieben, daß sich das Material mit einer konstanten Geschwindigkeit bewegt. Die Drehzahl der Eingangswelle bleibt dabei konstant.

Das erfindungsgemäße, stufenlos verstellbare Getriebe für ein Kraftfahrzeug mit den kennzeichnenden Merkmalen des Hauptanspruchs hat den Vorteil, daß sowohl zum Antrieb des Kraftfahrzeugs als auch zum Antrieb der Nebenaggregate mit einer relativ konstanten Drehzahl nur ein Getriebe benötigt wird.

Weitere Vorteile und vorteilhafte Weiterbildungen ergeben sich aus den Unteransprüchen und der Beschreibung.

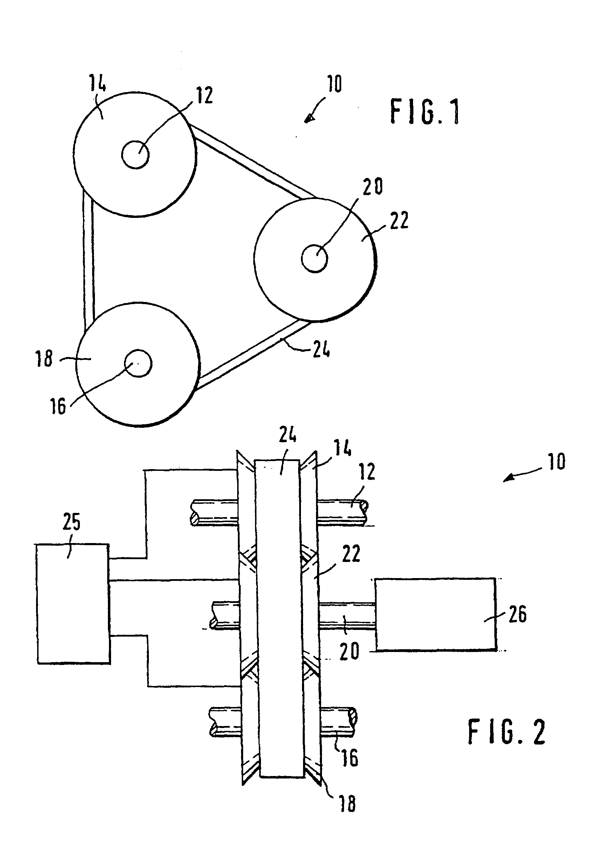

Ein Ausführungsbeispiel der Erfindung ist in der Zeichnung dargestellt und in der nachfolgenden Beschreibung näher erläutert. Es zeigen Figur 1 ein vereinfacht dargestelltes stufenlos verstellbares Getriebe und Figur 2 das Getriebe nach Figur 1 in einer Seitenansicht.

In der Figur 1 ist mit 10 ein stufenlos verstellbares Getriebe (Continously Variable Transmission = CVT) eines Kraftfahrzeugs bezeichnet. Im vorliegenden Ausführungsbeispiel entspricht das Getriebe 10 einem Kegelscheibenumschlingungs-Getriebe. Auf einer Eingangswelle 12 des Getriebes 10 ist ein erstes Kegelscheibenpaar 14 angeordnet. Die Eingangswelle 12 wird von einem nicht dargestellten Antriebsmotor des Kraftfahrzeugs angetrieben. Auf einer ersten Ausgangswelle 16 ist ein zweites Kegelscheibenpaar 18 angeordnet. Die Ausgangswelle 16 führt weiter zum nicht dargestellten Abtrieb des Kraftfahrzeugs. Auf einer zusätzlichen, zweiten Ausgangswelle 20 ist ein drittes Kegelscheibenpaar 22 angeordnet. Die Kegelscheibenpaare 14, 18, 22 werden gemeinsam von einem Riemen 24 umschlungen. Das erste Kegelscheibenpaar 14, das von der Eingangswelle 12 angetrieben wird, treibt seinerseits über den Riemen 24 die Kegelscheibenpaare 18 und 22 an.

Wie aus der Figur 2 hervorgeht, wirkt auf die Kegelscheibenpaare 14, 18, 22 zur axialen Verstellung des Abstands der Kegelscheibenpaare eine Steuerung 25 ein. Wie weiterhin aus der Figur 2 hervorgeht, dient die zusätzliche zweite Ausgangswelle 20 dem Antrieb mindestens eines mit 26 bezeichneten Nebenaggregates, wobei das mindestens eine Nebenaggregat ein Generator, ein Gebläse, eine Lenkhilfe oder dergleichen sein kann. Auch ein kombinierter Antrieb für mehrere Nebenaggregate gleichzeitig ist denkbar.

Die Funktionsweise eines Getriebes mit zwei Kegelscheibenpaaren 14, 18 ist bereits bekannt. Eine Veränderung des Übersetzungsverhältnisses ergibt sich dadurch, daß der Abstand der antriebs- und/oder abtriebsseitigen Kegelscheiben der Kegelscheibenpaare 14 bzw. 18 verändert wird, so daß sich aufgrund der konstanten Länge des Riemens 24 unterschiedliche Übersetzungsverhältnisse ergeben. Da das vorliegende Getriebe 10 jedoch über drei Kegelscheibenpaare 14, 18, 22 verfügt, ist dessen Funktionsweise unterschiedlich. Im normalen Fahrbetrieb werden bei Änderungen der Fahrgeschwindigkeit des Kraftfahrzeugs die Kegelscheibenpaare 14 und 18 über die Steuerung 25 axial verstellt. Die Fahrgeschwindigkeit ändert sich auch, wenn die Kegelscheibenpaare 14 und 18 nicht verstellt werden, sondern die Drehzahl des Antriebsmotors des Kraftfahrzeugs sich ändert. Es ist auch möglich, daß bei simultaner Verstellung der Kegelscheibenpaare 14, 18 und der Drehzahl des Antriebsmotors die Fahrgeschwindigkeit gleich bleibt. Gleichzeitig kann von der Steuerung 25 das Kegelscheibenpaar 22 so verstellt werden, daß die Drehzahl des mindestens. einen Nebenaggregates 26 in einem relativ engen Drehzahlbereich, d.h. möglichst konstant bleibt. Diese Aspekte sind in der Steuerung 25 zu speichern, so daß zum einen die gewünschte Fahrgeschwindigkeit erreicht bzw. gehalten wird und zum andern das Nebenaggregat 26 immer in einem möglichst kleinen Drehzahlbereich betrieben wird. Somit ermöglicht das vom Getriebe 10 und der Steuerung 25 gebildete Antriebssystem ein Energiemanagement für das Fahrzeug und das Nebenaggregat bzw. die Nebenaggregate 26: Bei einer hohen Fahrleistungsanforderung und mittlerer Leistungsanforderung der Nebenaggregate 26 kann die Drehzahl des Antriebsmotors zur höheren Leistungsabgabe erhöht werden und trotzdem können die Nebenaggregate 26 in einem optimierten Drehzahlbereich betrieben werden. Entsprechendes gilt bei hoher Leistungsanforderung der Nebenaggregate 26 und mittlerer Fahrleistungsanforderung.

Da insbesondere elektro-mechanische Nebenaggregate 26, beispielsweise Generatoren, in einem relativ engen Drehzahlbereich betrieben werden können, ist es möglich, sie konstruktiv auf diesen engen Drehzahlbereich auszulegen und dadurch elektrisch zu optimieren, wodurch bei sonst gleichbleibendem Bauvolumen des Nebenaggregats 26 der Wirkungsgrad verbessert bzw. die Leistung erhöht wird.

Dadurch, daß das dritte Kegelscheibenpaar 22 durch die Steuerung 25 verstellbar ist, die auf die auf der Eingangswelle 12 und der Ausgangswelle 14 angeordneten Kegelscheibenpaare 14, 18 einwirkt, ist der Aufwand für die zusätzlich in der Steuerung 25 zu integrierenden Ansteuerfunktionen relativ gering.

## Patentansprüche

1. Stufenlos verstellbares Getriebe (10) eines Kraftfahrzeuges mit jeweils einem auf der vom Antriebsmotor des Kraftfahrzeuges angetriebenen Eingangswelle (12) des Getriebes (10) und der zum Abtrieb des Kraftfahrzeuges führenden Ausgangswelle (14) des Getriebes (10) angeordneten verstellbaren Kegelscheibenpaar (14, 18) und einem die beiden Kegelscheibenpaare (14, 18) umschlingenden Riemen (24), **dadurch gekennzeichnet, daß** auf einer zusätzlichen Ausgangswelle (20) ein drittes verstellbares Kegelscheibenpaar (22) angeordnet ist, das von dem Riemen (24) umschlungen wird und das dem Antrieb mindestens eines Nebenaggregates (26) dient.

2. Stufenlos verstellbares Getriebe (10) nach Anspruch 1, **dadurch gekennzeichnet, daß** das dritte Kegelscheibenpaar (22) durch eine Steuerung (25) verstellbar ist, die auf die auf der Eingangswelle (12) und der Ausgangswelle (14) angeordneten Kegelscheibenpaare (14, 18) einwirkt.

3. Stufenlos verstellbares Getriebe (10) nach Anspruch 1 oder 2, **dadurch gekennzeichnet, daß** das mindestens eine Nebenaggregat ein Generator (26) ist.

4. Stufenlos verstellbares Getriebe (10) nach einem der Ansprüche 1 bis 3, **dadurch gekennzeichnet, daß** das mindestens eine Nebenaggregat ein Gebläses (26) ist.

## Claims

1. Continuously variable transmission (10) of a motor vehicle, with, in each case, a variable pair of conical discs (14, 18) which is arranged on the input shaft (12), driven by the engine of the motor vehicle, of the transmission (10) and on the output shaft (14), leading to the power take-off of the motor vehicle, of the transmission (10), and a belt (24) looping around the two pairs of conical discs (14, 18), **characterized in that**, on an additional output shaft (20), a third variable pair of conical discs (22) is arranged, around which the belt (24) is looped and which serves for driving at least one secondary assembly (26).

2. Continuously variable transmission (10) according to Claim 1, **characterized in that** the third pair of conical discs (22) is variable by means of a control (25) which acts on the pairs of conical discs (14, 18) arranged on the input shaft (12) and on the output shaft (14).

3. Continuously variable transmission (10) according to Claim 1 or 2, **characterized in that** the at least one secondary assembly is an alternator (26).

4. Continuously variable transmission (10) according to one of Claims 1 to 3, **characterized in that** the at least one secondary assembly is a blower (26).

## Revendications

1. Transmission à variation continue (10) pour un véhicule, comprenant chaque fois une paire de disques coniques (14, 18) mobiles montés dans une transmission (10), respectivement sur un arbre d'entrée (12) relié au moteur du véhicule et sur un arbre de sortie (16) servant à entraîner le véhicule, ainsi qu'une courroie (24) entourant les deux paires de disques (14, 18),
**caractérisée en ce qu'**
un arbre de sortie supplémentaire (20) porte une troisième paire (22) de disques coniques mobiles qui sont entourés par la courroie (24) et servent à entraîner au moins un équipement auxiliaire (26).

2. Transmission à variation continue (10) selon la revendication 1,
**caractérisée en ce que**
la troisième paire de disques coniques (22) peut être déplacée par une commande (25) qui agit sur les paires de disques (14, 18) montées sur l'arbre d'entrée (12) et l'arbre de sortie (14).

3. Transmission à variation continue (10) selon la revendication 1,
**caractérisée en ce que**
l'équipement auxiliaire au moins unique est un générateur (26).

4. Transmission à variation continue (10) selon l'une des revendication 1 à 3,
**caractérisée en ce qu'**
l'équipement auxiliaire au moins unique est un ventilateur (26).
